Europäisches Patentamt

European Patent Office

Office européen des brevets

(19)

(11) Numéro de publication: **0 110 738**
**B1**

(12) **FASCICULE DE BREVET EUROPEEN**

(45) Date de publication du fascicule du brevet:
02.04.86

(21) Numéro de dépôt: **83401925.9**

(22) Date de dépôt: **30.09.83**

(51) Int. Cl.⁴: **F 16 B 41/00**, G 09 F 3/03

(54) Bouchon d'inviolabilité d'une vis.

(30) Priorité: **15.10.82 FR 8217257**

(43) Date de publication de la demande:
**13.06.84 Bulletin 84/24**

(45) Mention de la délivrance du brevet:
**02.04.86 Bulletin 86/14**

(84) Etats contractants désignés:
**BE CH DE GB IT LI NL SE**

(56) Documents cités:
**NL - C - 45 354**
**US - A - 4 234 523**

(73) Titulaire: **Picard, Jacques Pierre, 22 Avenue Victor-Hugo, F-78180 Voisins le Bretonneux (FR)**

(72) Inventeur: **Picard, Jacques Pierre, 22 Avenue Victor-Hugo, F-78180 Voisins le Bretonneux (FR)**

(74) Mandataire: **Marquer, Francis, 35, Avenue Victor Hugo Résidence Chamfleury, F-78180 Voisins-le-Bretonneux (FR)**

ACTORUM AG

## Description

L'invention est relative à un bouchon en matière plastique destiné à empêcher que des personnes non habilitées puissent effectuer le dévissage et le revissage d'un boîtier facilement et sans laisser de traces visibles.

Une application particulièrement importante de l'invention concerne les cassettes vidéo préenregistrées de location. Celles-ci comportent généralement un boîtier formé de deux coquilles fixées entre elles par des vis accessibles depuis la face inférieure de la cassette. L'expérience montre que des fraudeurs, en nombre important, ouvrent la cassette pour enlever la bande d'origine et, éventuellement, la remplacer par une copie de qualité inférieure.

On a proposé de couler dans les orifices qui logent complètement les vis, en laissant un espace libre cylindrique de faible hauteur au-dessus de la tête de vis, un petit bouchon de cire à cacheter recouvrant la tête de vis. L'inconvénient de ce procédé est le risque de rupture involontaire de ce bouchon en cas de chute de la cassette, avec, comme conséquence, la nécessité d'effectuer une vérification onéreuse de l'enregistrement lors du retour d'une cassette dont les bouchons d'inviolabilité ont été brisés.

L'invention propose de supprimer cet inconvénient en utilisant un cache-tête de vis destiné à être logé dans un orifice comportant un espace libre au-dessus de la tête de la vis lorsque celle-ci est vissée, caractérisé en ce qu'il est constitué d'un bouchon en une matière élastique synthétique apte à laisser des traces visibles lorsqu'un instrument en entame la surface, et conformé en coiffe apte à recouvrir le dessus de la tête de vis en en épousant la forme, surmontée d'une collerette tronconique, évasée vers l'extérieur et de hauteur inférieure à celle de la coiffe. Le bord de la coiffe, avantageusement cylindrique ou de faible conicité, sert d'élément de guidage pour l'insertion du bouchon dans l'orifice, tandis que la collerette tronconique joue le rôle d'élément d'ancrage. La surface extérieure du dôme de la coiffe, avantageusement bombée, sert d'appui pour un outil d'insertion en contribuant à la déformation de la collerette, tout en constituant par ailleurs une surface rayable de détection des tentatives d'ouverture.

Le brevet US-A-4 234 523 (Onuki) décrit un bouchon métallique en forme de coupelle cylindrique, destiné à fermer une ouverture cylindrique ménagée dans une plaque d'accès, contrôlé à la vis de réglage d'un carburateur. Le but recherché n'est pas de déceler des tentatives d'ouvertures, et le mode d'ancrage est sans rapport avec celui de l'invention.

Le brevet NL-C-45 354 (Hans) décrit un cache-tête de vis plat engagé à force dans une entaille circulaire en biseau des bords de l'orifice de vis par déformation à partir d'une forme initiale sphérique. Ce mode d'engagement est également sans rapport avec l'invention.

D'autres particularités, ainsi que les avantages de l'invention, apparaîtront clairement à la lumière de la description détaillée ci-après.

Au dessin annexé:

La fig. 1 représente un bouchon d'inviolabilité monté à l'intérieur de son logement cylindrique dans un boîtier de cassette, et

la fig. 2 est une vue avec demi-coupe, à échelle agrandie, d'une moitié du bouchon.

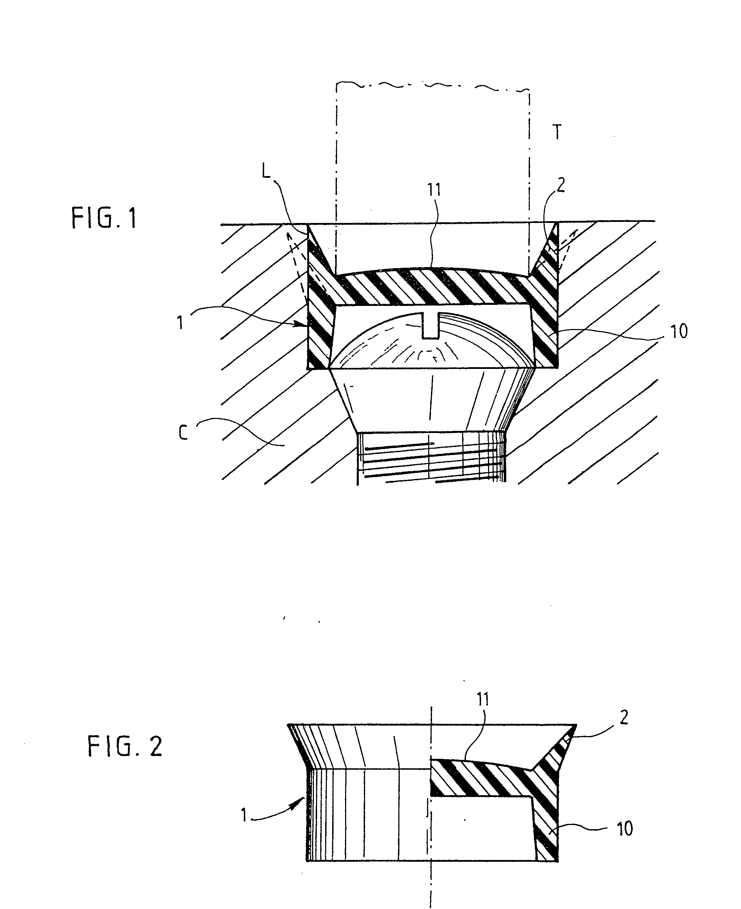

A la fig. 1, on a représenté l'un des logements de vis L dont est munie une cassette vidéo, dont on voit une portion C de la coquille correspondant à la face inférieure. Ces logements sont habituellement cylindriques et ont un diamètre de 6 mm, avec une tolérance de fabrication de +0,1/−0,2 mm. Le bouchon (fig. 1) comporte une coiffe 1 surmontée d'une collerette 2.

La coiffe 1 comporte un bord 10 formant jupe à conicité faible ou nulle.

Dans l'exemple décrit, la jupe 10 a un plus grand diamètre extérieur de 5,8 mm et un plus petit diamètre extérieur de 5,6 mm, tandis que son plus grand diamètre intérieur est de 5 mm et son petit diamètre intérieur de 4,8 mm. La surface intérieure du dôme 11 de la coiffe est plane et située à 1,5 mm du plan du bord inférieur de la jupe, tandis que la surface extérieure du dôme est bombée. Par exemple, l'épaisseur du dôme à sa périphérie est de 0,7 mm, tandis qu'elle est de 0,9 mm au centre.

La collerette 2 a une surface extérieure tronconique qui se raccorde avec celle de la jupe dans le plan de section droite de plus faible diamètre (5,6 mm) de celle-ci. A titre d'exemple, le plus grand diamètre de la collerette 2 est 6,3 mm et son plus petit diamètre intérieur (dans le susdit plan de section) est de 5 mm.

La jupe 10 s'engage facilement dans le logement L et assure un guidage efficace pendant toute l'introduction du bouchon jusqu'à ce que le bord de la jupe vienne au contact de la paroi de C.

Quand le bouchon est en place, la partie bombée de la tête de vis est logée dans la coiffe et la totalité de la faible hauteur du logement L (3 mm) est occupée par la surface extérieure du bouchon, ce qui permet un ancrage efficace de celui-ci en dépit de cette faible hauteur.

Cet ancrage élastique est principalement assuré par la collerette, du fait de sa conicité relativement importante et du bombé de la surface extérieure du dôme 11.

Du fait de la faible surface intérieure relative de la collerette et de la surface bombée relativement importante du dôme, une tentative d'ouverture au moyen d'un instrument aboutira inévitablement à la rayure du dôme, plus particulièrement dans sa région centrale bien visible de l'extérieur. Le bouchon sera avantageusement réalisé par moulage en une matière plastique teintée dans la masse et sur laquelle les raies sont blanchâtres et très apparentes. La collerette 2 a avantageusement un profil en angle aigu de façon à présenter un bord qui n'offre aucune prise à un instrument.

On notera que la conicité de la collerette et, éventuellement, de la jupe, ainsi que l'élasticité de la matière plastique, permettent au bouchon de s'adapter à des logements de vis dont les diamètres varient légèrement d'un logement à l'autre.

L'extraction autorisée du bouchon se fera au moyen d'un outil spécial comportant une tige coulissante dont la manœuvre fait s'écarter l'un de l'autre deux bras pivotants munis à leurs extrémités de pointes transversales. L'extrémité de l'outil étant introduite dans la collerette, on écarte les pointes en manœuvrant la tige et elles viennent pénétrer dans la collerette, sans toucher au dôme. Il suffit alors d'enlever l'outil pour obtenir l'extraction du bouchon, et de libérer le rapprochement des bras pour dégager les pointes. La réalisation d'un tel outil est à la portée de l'homme de l'art, compte tenu de celui qui est décrit par exemple dans le brevet FR-A-1 378 136 (Dougier) et qu'il suffira d'adapter en munissant les bras qu'il comporte de pointes transversales dirigées vers l'extérieur.

La fig. 1 montre que l'outil d'insertion est une tige cylindrique T de 4,8 mm de diamètre, dont la base est elle-même concave. Cet outil s'engage sur la surface extérieure du dôme de la coiffe.

## Revendications

1. Cache-tête de vis destiné à être logé dans un orifice comportant un espace libre au-dessus de la tête de la vis lorsque celle-ci est vissée, caractérisé en ce qu'il est constitué d'un bouchon en matière élastique apte à laisser des traces visibles lorsqu'un instrument en entame la surface, et conformé en coiffe (1) apte à recouvrir le dessus de la tête de vis en en épousant la forme, surmontée d'une collerette (2) tronconique, évasée vers l'extérieur et de hauteur inférieure à celle de la coiffe.

2. Bouchon cache-tête de vis selon la revendication 1, caractérisé en ce que le bord (10) de la coiffe (1) est doué d'une conicité sensiblement inférieure à celle de la surface extérieure de la collerette (2) à laquelle il se raccorde.

3. Bouchon selon l'une des revendications 1 ou 2, caractérisé en ce que le dôme (11) de la coiffe (1) a une surface extérieure bombée.

4. Bouchon selon l'une des revendications 1, 2 ou 3, caractérisé en ce que la collerette (2) a un profil en angle aigu.

## Patentansprüche

1. Schraubenkopfkappe, die in eine Öffnung eingeführt wird, wo, wenn die Schraube ganz eingeschraubt ist, ein Raum über dem Schraubenkopf freibleibt, dadurch gekennzeichnet, dass die Kappe aus einem Pfropfen aus nachgiebigem Material besteht, auf dem sichtbare Spuren verbleiben, wenn ein Instrument die Oberfläche schrammt, wobei dieser Pfropfen die Form einer Kappe (1) hat, welche den Scheitel des Schraubenkopfes bedeckt und sich dessen Form anpasst und auf dem ein stumpfkegelförmiger, sich nach aussen verbreiternder Flansch (2) sitzt, dessen Höhe geringer ist, als die der Kappe.

2. Schraubenkopfkappe in Form eines Pfropfens nach Anspruch 1, dadurch gekennzeichnet, dass der Rand (10) der Kappe (1) weniger kegelförmig verläuft, als die äussere Oberfläche des Flansches (2), mit der er verbunden ist.

3. Pfropfen nach Anspruch 1 oder 2, dadurch gekennzeichnet, dass die Kuppe (11) der Kappe (1) eine gewölbte äussere Oberfläche besitzt.

4. Pfropfen nach Anspruch 1, 2 oder 3, dadurch gekennzeichnet, dass der Flansch (2) ein spitzwinkliges Profil besitzt.

## Claims

1. A screw head cap intended to be housed in an orifice comprising a free space above the head of the screw when this latter is screwed home, characterized in that it is formed by a plug of resilient material adapted to leave visible traces when an instrument breaks the surface and is shaped as a cap (1) adapted to cover the top of the screw head by taking on the shape, and surmounted by an outwardly flared truncated cone shaped collar (2) of a height less than that of the cap.

2. The screw head cap plug as claimed in claim 1, characterized in that the edge (10) of the cap (1) is given a taper substantially less than that of the outer surface of the collar (2) to which it is connected.

3. The screw as claimed in claim 1 or 2, characterized in that the dome (11) of the cap (1) has a bulging outer surface.

4. The plug as claimed in claim 1, 2 or 3, characterized in that the collar (2) has an acute angle profile.

FIG. 1

FIG. 2